# EUROPÄISCHE PATENTSCHRIFT

(11) **EP 2 962 538 B1**
(45) Veröffentlichungstag und Bekanntmachung des Hinweises auf die Patenterteilung: **10.06.2020**
(21) Anmeldenummer: 15176354.7
(22) Anmeldetag: 12.07.2011
(51) Int. Cl.: A01B 15/02, A01B 35/26

(54) **BODENBEARBEITUNGSWERKZEUG**
SOIL WORKING TOOL
OUTIL DE TRAVAIL DU SOL

(30) Priorität: 15.07.2010 DE 202010008085 U
(43) Veröffentlichungstag der Anmeldung: 06.01.2016
(62) Teilanmeldung aus: 11733666.9
(73) Patentinhaber: Betek GmbH & Co. KG, 78733 Aichhalden (DE)
(72) Erfinder: Widmaier, Helmut, 78733 Aichhalden (DE); Smeets, Florian, 72270 Baiersbronn (DE)
(74) Vertreter: Herrmann, Jochen

(56) Entgegenhaltungen:
- EP-A1- 0 923 851
- DE-C- 488 478
- DE-U1-202009 008 582
- FR-A- 818 785
- FR-A1- 2 603 151
- NL-C- 103 987
- US-A- 2 337 777
- US-A1- 2005 072 345
- US-A1- 2006 231 275

## Beschreibung

Die Erfindung betrifft ein Bodenbearbeitungswerkzeug, insbesondere eine Grubberspitze mit einem Träger, das an einem Schneidenhalter ein Haupt-Schneidelement und wenigstens zwei Neben-Schneidelemente trägt, wobei sowohl das Haupt-Schneidelement als auch die Neben-Schneidelemente jeweils eine Schneidkante aufweisen.

Ein solches Bodenbearbeitungswerkzeug ist aus der DE 10 2009 029 894 A1 und aus DE 20 2009 008 582 U1 bekannt. Dabei sind die Schneidelemente am Schneidenhalter angelötet, wobei das Haupt-Schneidelement eine quer zur Werkzeug-Vorschubrichtung verlaufende Schneidkante bildet. Die Neben-Schneidelemente sind winklig zu dem Haupt-Schneidelement angestellt.

Aus US 2006/0231275 A1 ist ein landwirtschaftliches Bodenbearbeitungswerkzeug bekannt, das einen Grindel aufweist. Der Grindel ist mit Befestigungsaufnahmen zur Befestigung an einer Bodenbearbeitungsmaschine ausgestattet. An seinem der Befestigungsseite abgewandten freien Ende besitzt der Grindel eine Aufnahme. An dieser kann ein Basisteil befestigt werden. Zu diesem Zweck weist das Basisteil Kopplungsabschnitte auf. Diese umfassen den Grindel seitlich und besitzen Befestigungsaufnahmen, um das Basisteil an dem Grindel verschrauben zu können. Auf seiner Vorderseite ist das Basisteil mit einer hinterschnittenen Nut ausgerüstet. Diese dient als Kupplung für ein Verschleißteil, insbesondere ein Schneidwerkzeug.

FR 2 603 151 offenbart eine Flügelschar. Dabei ist wieder ein Grindel verwendet, an dem seitlich Scharflügel angebaut sind. Vorderseitig trägt der Grindel eine Scharspitze, die in ein Leitelement übergeht. Das Leitelement ist mit der Scharspitze gekoppelt. Die Scharspitze ist aus einem Blechzuschnitt gefertigt.

In FR 818 785 ist ein Schneidezahn beschrieben. Dieser trägt an einem abgewinkelten Halteblech zwei zueinander beabstandete Schneidelemente. Zwischen diesen Schneideelementen ist ein Messer befestigt.

NL 103987 offenbart eine Pflugschar. Dabei ist an dem freien Ende eines Grindel ein Scharelement angeschweißt. Das Scharelement ist aus einem Blechzuschnitt gefertigt.

US 2,337,777 beschreibt eine Pflugschar. Diese besitzt einen zentralen Spitzenteil. An diesen sind zwei seitliche und zueinander im Winkel stehende Scharflügel angekoppelt. Das Spitzenteil und die Scharflügel sind mit einem zentralen Träger gemeinsam verschraubt.

US 2005/0072345 A1 beschreibt einen Tiefenlockerer. Dieser weist einen Schaft auf, an dem endseitig eine Schneidnase befestigt ist. An die Schneidnase sind seitlich ausladende Flügelelemente einteilig angeformt.

Es ist Aufgabe der Erfindung, ein Bodenbearbeitungswerkzeug der eingangs erwähnten Art zu schaffen, mit der sich die Penetration zu Gunsten eines besseren Schneidergebnisses optimieren lässt.

Diese Aufgabe wird mit den Merkmalen des Anspruches 1 gelöst. Demgemäß ist es vorgesehen, dass das Tragteil einen auf seiner vorderen Seite vorstehenden Brechersteg und einer rückwärtigen Seite eingetiefte Brechernut aufweist oder das Tragteil einen auf seiner vorderen Seite eingetiefte Brechernut und seiner rückwärtigen Seite vorstehenden Brechersteg aufweist.

Durch diese Maßnahme wird eine Schollenbrechung und/oder Bodenverdrängung erreicht. Der vorstehende Brechersteg sorgt für eine gute Schollenzerteilung und in die Brechernut kann zu Gunsten einer geringeren erforderlichen Zugleistung ein gewisser Materialabfluss bewirkt werden. Zudem wirkt diese Bauweise auch der unerwünschten Sohlenbildung entgegen.

Gemäß einer bevorzugten Erfindungsvariante kann es vorgesehen sein, dass die Schneidkanten der Neben-Schneidelemente nicht mehr wie beim Stand der Technik schräg angeordnet und V-förmig zueinander positioniert sind. Hierdurch ergibt sich ein sauberer gerader Schnitt, der ein eindeutigeres Schneidergebnis liefert und aufgrund der kürzeren Schneidkanten zu einer geringeren erforderlichen Zugleistung führt. Auf diese Weise wird die Penetration in den Boden verbessert. Darüber hinaus können zu Gunsten geringerer Herstellkosten auch kürzere Hartmetall-Längen verwendet werden, wobei eine gleiche Scharbreite gegenüber dem Stand der Technik beibehalten werden kann.

Gemäß einer bevorzugten Erfindungsvariante kann es vorgesehen sein, dass die Schneidkanten der Neben-Schneidelemente zueinander fluchtend angeordnet sind. Auf diese Weise ergibt sich während des Schneideingriffes eine gleichmäßige Werkzeugbelastung, die insbesondere die Befestigung der Grubberspitze schont.

Besonders bevorzugt ist es vorgesehen, dass die Schneidkante des Haupt-Schneidelementes parallel zu den Schneidkanten der Neben-Schneidelemente angeordnet ist. Auf diese Weise entsteht ein stufiger Schneideingriff mit sauberen, geraden Schnitten.

Besonders gute Schneidergebnisse lassen sich insbesondere dann erzielen, wenn die Schneidkante des Haupt-Schneidelementes mindestens 4 mm von der Schneidkante des Neben-Schneidelementes beabstandet angeordnet ist. Bei dieser Beabstandung wird zu Gunsten einer geringeren erforderlichen Vorschubleistung ein stufiger Schneideingriff bewirkt. Zudem wird eine Sohlenbildung vermieden.

Es hat sich gezeigt, dass die Schneidkante des Haupt-Schneidelementes maximal 15 mm von der Schneidkante des Neben-Schneidelementes beabstandet sein sollte. Dann ergibt sich eine besonders stabile Werkzeugausführung.

Ein erfindungsgemäßes Bodenbearbeitungswerkzeug kann dergestalt sein, dass der Schneidenhalter Schneidelementaufnahmen für das Haupt-Schneidelement und die Neben-Schneidelemente aufweist, dass die Schneidelementaufnahmen eine Sitzfläche und eine dazu im Winkel stehende Anlagefläche aufweisen, dass das Haupt-Schneidelement und die Neben-Schneidelemente jeweils mit einem Befestigungsabschnitt auf der Sitzfläche und mit einem Schneidansatz auf der Anlagefläche abgestützt sind. Hierdurch ergibt sich eine mechanisch stabile Schneidengeometrie. Weiterhin kann es auch vorgesehen sein dass die Anlageflächen und/oder die Sitzflächen der Neben-Schneidelemente und der Haupt-Schneidelemente zueinander parallel angeordnet sind. Hierbei lässt sich eine einfache, exakte und reproduzierbare Ausrichtung der Neben-Schneidelemente und des Haupt-Schneidelements sicherstellen.

Gemäß einer denkbaren Erfindungsausgestaltung kann es vorgesehen sein, dass das Haupt-Schneidelement in Vorschubrichtung gegenüber den Neben-Schneidelementen vorsteht oder zurückversetzt zu diesen angeordnet ist.

Bevorzugt sind die Sitzflächen im Bereich von 8 bis 14 mm zueinander beabstandet angeordnet. Dann ergeben sich stabile Zahngeometrien am Schneidenhalter zur Aufnahme der Schneidelemente. Hierbei kann es insbesondere auch vorgesehen sein, dass die Anlageflächen mindestens 4mm, vorzugsweise im Bereich von 15mm bis 30mm, zueinander beabstandet angeordnet sind.

Wenn vorgesehen ist, dass die Ableitflächen zueinander im Winkel, vorzugsweise im Bereich zwischen 0,1° und < 90° angeordnet sind, dann kann über die Anstellung der Ableitflächen der Neben-Schneidelemente gegenüber dem Haupt-Schneidelement die Aggressivität des Bodenbearbeitungswerkzeuges eingestellt werden. Steiler geneigte Ableitflächen führen zu einer stärkeren Materialverdrängung, während flachere Winkel zu einer verringerten erforderlichen Maschinenzugkraft führen.

Eine weiter bevorzugte Erfindungsvariante sieht vor, dass sowohl das Haupt- als auch die Neben-Schneidelemente Ableitflächen aufweisen, die zueinander parallel angeordnet und mindestens 4mm, vorzugsweise im Bereich von 5mm bis 11mm, zueinander beabstandet angeordnet sind. Über die parallelen Ableitflächen lässt sich das Schneidgut zielgerichtet abführen. Die Ableitflächen dienen weiterhin dem Schutz des Stahlkörpers vor Auswaschungen.

Zu Gunsten einer symmetrischen Kraftverteilung ist es erfindungsgemäß denkbar, dass an dem Schneidenhalter die Neben-Schneidelemente beidseitig symmetrisch zu dem Haupt-Schneidelement angeordnet sind. Dabei ergibt sich, ausgehend von den Neben-Schneidelementen zu dem Hauptschneidelement, ein einwärts gerichteter Materialfluss. Die Neben-Schneidelemente werden zu Gunsten einer geringeren Beanspruchung des Haupt-Schneidelementes stärker verschleißbelastet. Darüber hinaus wird durch den einwärts gerichteten Materialfluss der Schneidenhalter seitlich weniger verschleißbeansprucht.

Denkbar ist es insbesondere auch, dass beidseits des Haupt-Schneidelementes jeweils wenigstens zwei Neben-Schneidelemente angeordnet sind. Auf diese Weise können mehrere Schneidstufen realisiert werden.

Eine gute Kraftverteilung sowohl auf das Haupt-, als auch auf die Neben-Schneidelemente lässt sich einfach dadurch erreichen, dass die Breite der Schneidkanten der Neben-Schneidelemente mindestens 0,5 mal der Breite der Schneidkante des Haupt-Schneidelementes beträgt.

Ein erfindungsgemäßes Bodenbearbeitungswerkzeug kann dergestalt sein, dass die Schneidkante des Haupt-Schneidelementes quer zur Vorschubrichtung und in Schwerkraftrichtung versetzt zu der Schneidkante des Neben-Schneidelementes steht, dann wird eine Furchenziehung und eine Verringerung der unerwünschten Sohlenbildung erreicht.

Die folgenden Zeichnungen dienen zu Erläuterung. Es zeigen:
- Figur 1: eine Grubberspitze in perspektivischer Darstellung;
- Figur 2: die Grubberspitze gemäß Figur 1, längs des in Figur II-II gekennzeichneten Schnittverlaufes;
- Figur 3: eine weitere Ausgestaltungsvariante einer Grubberspitze;
- Figur 4: eine Schnittdarstellung längs des in Figur 3 mit IV-IV markierten Schnittverlaufes;
- Figur 5: eine weitere Ausführungsvariante einer Grubberspitze in perspektivischer Darstellung;
- Figur 6: ein Schnittverlauf längs des in Figur 5 mit V-V markierten Schnittverlaufes;
- Figur 7: eine weitere Ausführungsvariante einer Grubberspitze in perspektivischer Darstellung;
- Figur 8: ein Schnittverlauf längs des in Figur 7 mit VIII-VIII markierten Schnittverlaufes;
- Figur 9: eine weitere Ausführungsvariante einer Grubberspitze in perspektivischer Darstellung;
- Figur 10: ein Schnittverlauf längs des in Figur 9 mit X-X markierten Schnittverlaufes;
- Figur 11: ein Schnittverlauf längs des in Figur 9 mit XI-XI markierten Schnittverlaufes;
- Figur 12: eine weitere Ausführungsvariante einer Grubberspitze in perspektivischer Darstellung;
- Figur 13: die Grubberspitze gemäß Figur 12, längs des in Figur XIII-XIII gekennzeichneten Schnittverlaufes;
- Figur 14: eine weitere Ausführungsvariante einer Grubberspitze in perspektivischer Darstellung;
- Figur 15: die Grubberspitze gemäß Figur 15, längs des in Figur XV-XV gekennzeichneten Schnittverlaufes; und
- Figur 16: ein Schnittverlauf längs des in Figur 14 mit XVI-XVI markierten Schnittverlaufes.

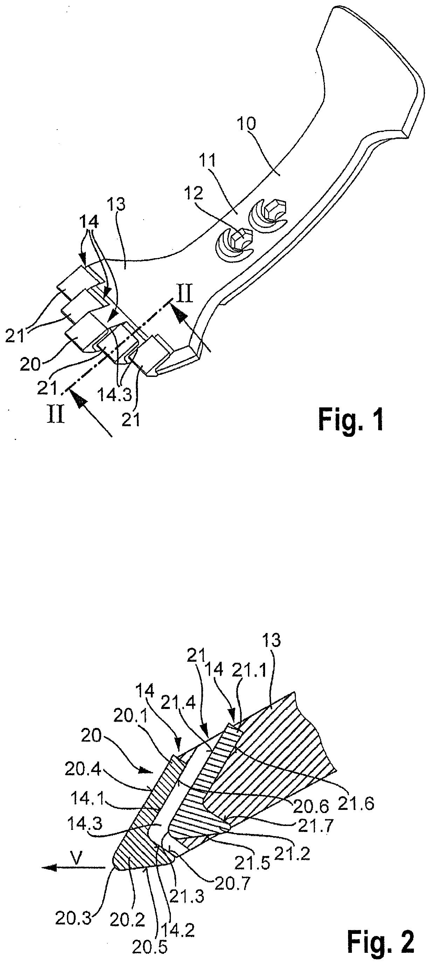

Die in den Figuren 1 bis 8 und 12 sowie 13 dargestellten Bodenbearbeitungswerkzeuge stellen keine erfindungsgemäßen Bodenbearbeitungswerkzeuge dar, da sie keinen vorstehenden Brechersteg und gleichzeitig eine eingetiefte Brechernut aufweisen.
Figur 1 zeigt eine Grubberspitze mit einem Tragteil 10, bestehend aus einem Stahlkörper. Die Grubberspitze besitzt einen Befestigungsabschnitt 11, der mit Befestigungsaufnahmen 12 in Form von Durchbrüchen versehen ist. Das Tragteil 10 weist endseitig einen Schneidenhalter 13 auf, der mit Schneidelementaufnahmen 14 ausgerüstet ist.

Wie die Figur 2 erkennen lässt, weisen die Schneidelementaufnahmen 14 eine Sitzfläche 14.1 auf, die in Vorschubrichtung V der Grubberspitze gerichtet ist. An diese Sitzfläche 14.1 schließt sich winklig eine Anlagefläche 14.2 an. Die Schneidelementaufnahmen 14 dienen zur Aufnahme eines Haupt-Schneidelementes 20 und vier Neben-Schneidelementen 21, wie dies die Figur 1 erkennen lässt. Das Haupt-Schneidelement 20 und die Neben-Schneidelemente 21 können identisch ausgestaltet sein. Bedarfsweise kann es jedoch auch vorgesehen sein, dass die Neben-Schneidelemente 21 eine geringere Breite quer zur Vorschubrichtung V aufweisen, sonst jedoch identisch mit dem Haupt-Schneidelement 20 sind, so dass sie in der gleichen Werkzeugform mit verschiebbaren Werkzeugwangen herstellbar sind. Das Haupt-Schneidelement 20 und die Neben-Schneidelemente 21 weisen einen Befestigungsabschnitt 20.1, 21.1 auf, der plattenförmig ausgebildet ist. Der Befestigungsabschnitt 20.1, 21.1 bildet eine Stützfläche 20.6, 21.6. An den Befestigungsabschnitt 20.1, 21.1 ist ein Schneidansatz 20.2, 21.2 einteilig angeformt. Der Schneidansatz 20.2, 21.2 bildet eine weitere Stützfläche 20.7, 21.7. Dabei stehen die Stützflächen 20.6, 20.7 beziehungsweise 21.6, 21.7 rechtwinklig zueinander. Das Haupt-Schneidelement 20 und die Neben-Schneidelemente 21 bilden frontseitig eine Ableitfläche 20.4, 21.4, die in einer gerundeten Schneidkante 20.3, 21.3 ausläuft. Die Schneidkante 20.3, 21.3 geht in eine rückwärtige Freifläche 20.5, 21.5 über.

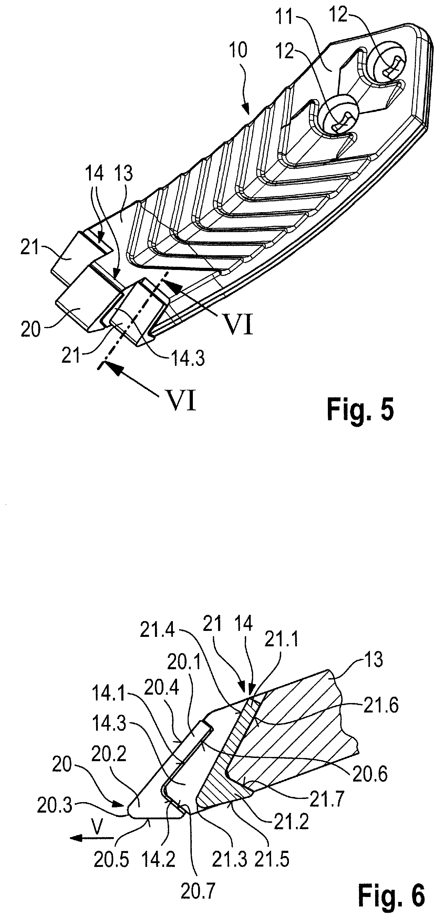

Zur Befestigung der Haupt-Schneidelemente 20 und der Neben-Schneidelemente 21, die aus einem Hartwerkstoff, insbesondere Hartmetall, bestehen, wird eine Lötverbindung verwendet. Denkbar ist es auch, eine Klebeverbindung einzusetzen, so dass eine günstigere Herstellung möglich wird. Das Haupt-Schneidelement 20 und die Neben-Schneidelemente 21 werden mit ihren Stützflächen 20.6, 20.7 bzw. 21.6 und 21.7 auf die korrespondierenden Sitzflächen 14.1 und Anlageflächen 14.2 aufgesetzt. An diesen Flächen erfolgt die stoffschlüssige Verbindung. Im montierten Zustand sind die Schneidkanten 20.3, 21.3 des Haupt-Schneidelementes 20 und der Neben-Schneidelemente 21 zueinander parallel ausgerichtet. Dabei fluchten die Schneidkanten 21.3 der Neben-Schneidelemente 21 paarweise. Weiterhin sind die Ableitflächen 20.4 und 21.4 sowie die Freiflächen 20.5 und 21.5 jeweils zueinander parallel ausgerichtet, wie dies die Figur 2 deutlich erkennen lässt. Die Ableitflächen 20.4 und 21.4 und/oder die Freiflächen 20.5 und 21.5 können auch im Winkel zueinander stehen, wie dies das Ausführungsbeispiel gemäß den Figuren 5 und 6 erkennen lässt. Weiterhin lässt die Figur 2 erkennen, dass sich an die Sitzflächen 14.1 rechtwinklig Flanken 14.3 des Schneidenhalters 13 anschließen. Die Befestigungsabschnitte 20.1 des Haupt-Schneidelementes 20 und der Neben-Schneidelemente 21 decken die Sitzflächen 14.1 quer zur Vorschubrichtung V ab, so dass das relativ weichere Material des Schneidenhalters 13 geschützt ist.

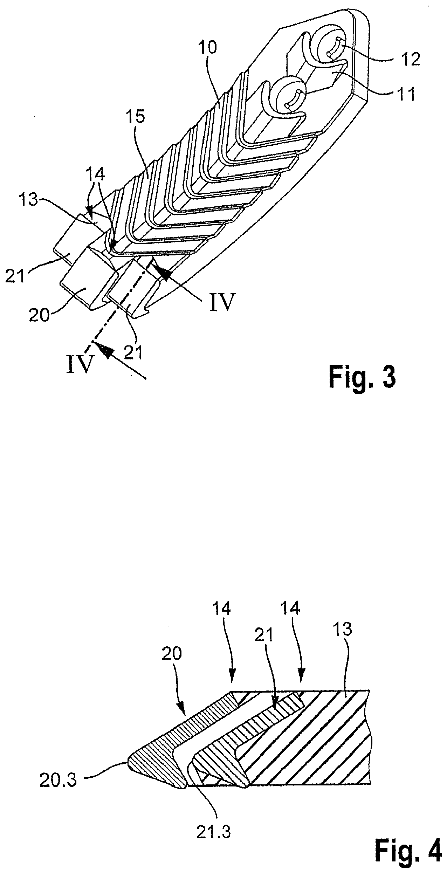

In den Figuren 3 und 4 ist eine weitere Ausgestaltungsvariante einer Grubberspitze dargestellt. Hierbei sind ein Haupt-Schneidelement 20 und zwei Neben-Schneidelemente 21 an einem Schneidenhalter 13 verbaut. Die Gestaltung des Haupt-Schneidelementes 20 und der Neben-Schneidelemente 21 entspricht im Wesentlichen der gemäß den Figuren 1 und 2, weshalb auf die vorstehenden Ausführungen verwiesen werden kann. Zudem entspricht die Ausgestaltung der Schneidelementaufnahmen 14 im Wesentlichen denen der Grubberspitze gemäß den Figuren 1 und 2. Insofern wird ebenfalls auf die vorstehenden Ausführungen Bezug genommen. Im Gegensatz zu der Grubberspitze gemäß Figuren 1 und 2 werden vorliegend nur zwei Neben-Schneidelemente 21 verbaut, deren Schneidkanten 20.3 zueinander parallel ausgerichtet sind und zueinander fluchten. Denkbar ist es auch, dass die Schneidkanten 20.3 zueinander parallel versetzt angeordnet sind. Zusätzlich ist an der Grubberspitze gemäß den Figuren 3 und 4 am Tragteil 10 frontseitig eine angeformte Rippenstruktur verwendet, die die Penetration der Grubberspitze in den Boden unterstützt. Zusätzlich kann sich zwischen den Rippen in den Vertiefungen Abraummaterial verdichten. Dies führt zu einem "natürlichen" Verschleißschutz.

Die Grubberspitze gemäß den Figuren 5 und 6 stellt eine Abwandlung der Grubberspitze nach Figur 3 und 4 dar. Wie bereits vorstehend erwähnt wurde, stehen die Ableitflächen 21.4 und die Freiflächen 21.5 der Neben-Schneidelemente 21 im Winkel zu der Ableitfläche 20.4 beziehungsweise der Freifläche 20.5 des Haupt-Schneidelementes 20. Dabei ist das Haupt-Schneidelement 20 flacher zur Vorschubrichtung V angestellt, als die Neben-Schneidelemente 21. Damit bewirkt das Haupt-Schneidelement 20 einen schärferen Eingriff in den Boden, während die Neben-Schneidelemente 21 für eine größere Verdrängung sorgen.

Figur 6 lässt erkennen, dass die Schneidkanten 21.3 der Neben-Schneidelemente 21 quer zur Vorschubrichtung V und entgegen der Schwerkraftrichtung gegenüber der Schneidkante 20.3 des Haupt-Schneidelementes 20 versetzt angeordnet ist. Hierdurch entsteht eine geringere Sohlenbildungsneigung, da das Haupt-Schneidelement 20 tiefere Furchen zieht.

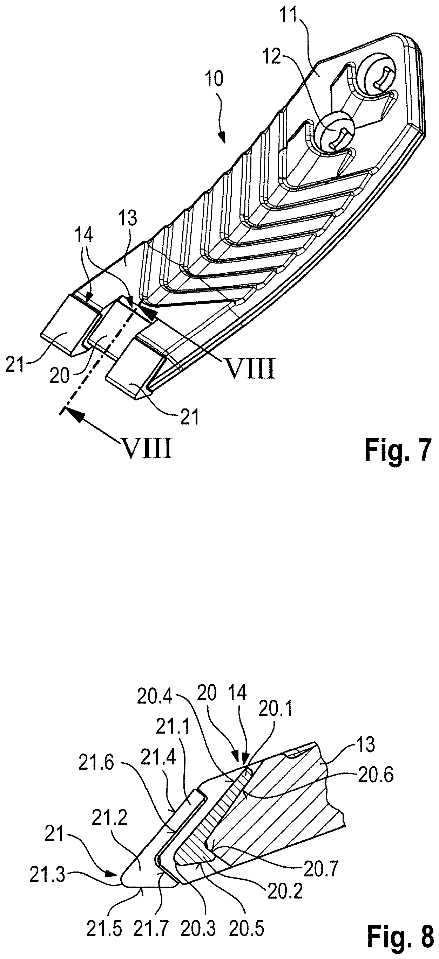

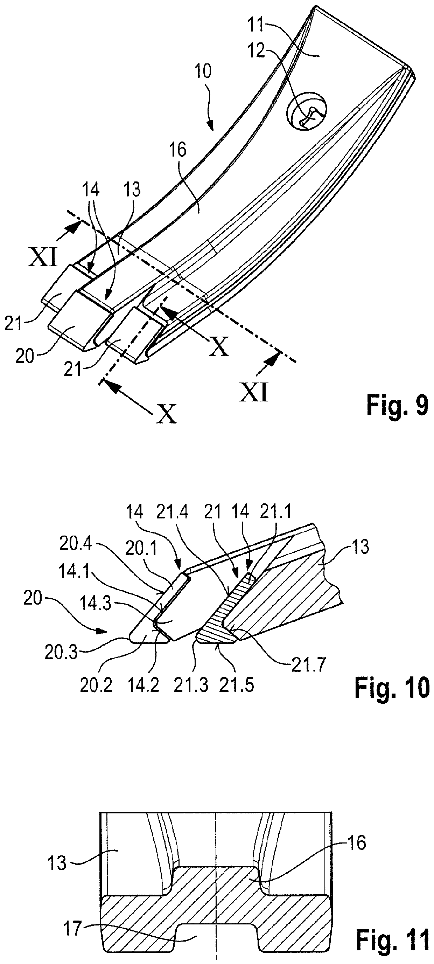

Der gleiche Effekt kann auch dann erreicht werden wenn die Schneidkanten 21.3 der Neben-Schneidelemente 21 tiefer stehen, als die Schneidkante 20.3 des Haupt-Schneidelementes 20. Eine solche Ausführungsvariante zeigen Figuren 8 bis 10. Wie diese Zeichnungen veranschaulichen, ist das Tragteil 10 weiterhin an seiner in Vorschubrichtung V vorderen Seite mit einem vorstehenden Brechersteg 16 ausgestattet. Dieser bildet die Schneidelementaufnahme 14 für das Haupt-Schneidelement 20. Ausgehend von dem Haupt-Schneidelement 20 verbreitert der Brechersteg 16 sich kontinuierlich in Richtung auf das dem Haupt-Schneidelement 20 abgewandten Ende des Tragteils 10. Damit wird ein spannungsoptimierter Aufbau erreicht. Zusätzlich steift der Brechersteg 16 auch noch das Tragteil 10 aus und erhöht das Widerstandmoment gegen Biegung in Hauptkraftrichtung. Figur 10 lässt erkennen, dass rückwärtig eine Brechernut 17 in das Tragteil 10 eingetieft ist. Diese erstreckt sich wieder, ausgehend vom Haupt-Schneidelement 20 in Richtung zum rückwärtigen Ende des Tragteils 10, wie die Figuren 9 und 10 erkennen lassen.

Der vorstehende Brechersteg 16 sorgt für eine gute Schollenzerteilung und in die Brechernut 17 kann zu Gunsten einer geringeren erforderlichen Zugleistung ein gewisser Materialabfluss bewirkt werden. Zudem wirkt diese Bauweise auch der unerwünschten Sohlenbildung entgegen.

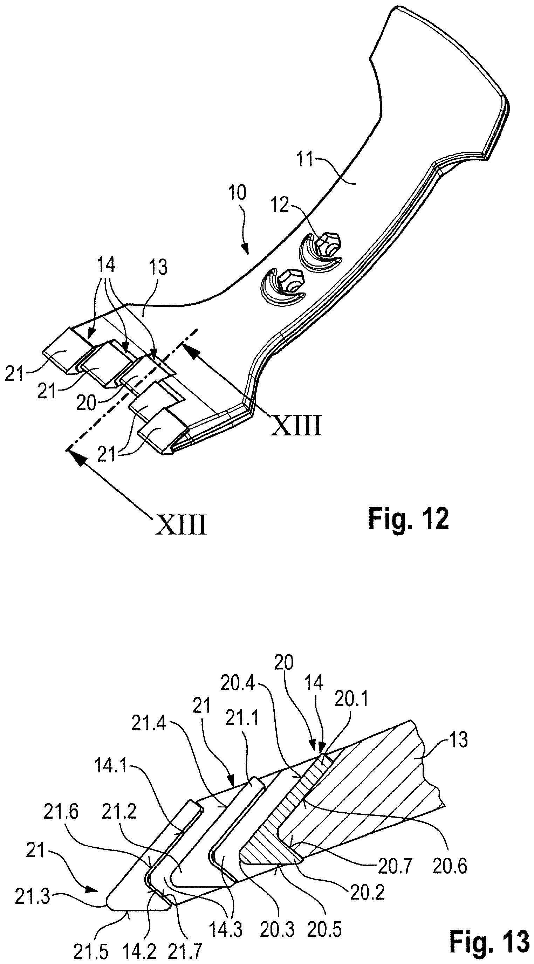

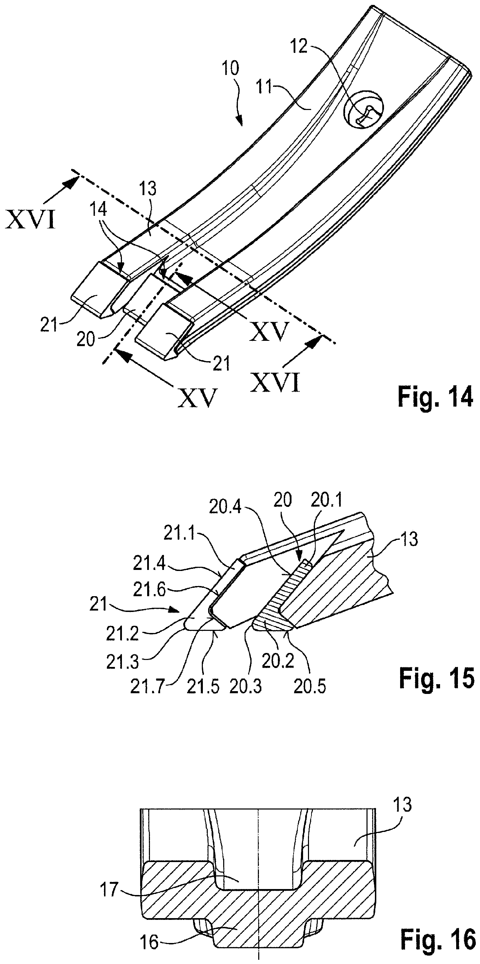

Ein gleicher Effekt kann auch erreicht werden, wenn umgekehrt vorderseitig eine Brechernut 17 und rückseitig ein Brechersteg 16 am Tragteil 10 angeformt sind. Eine solche Konstruktion zeigt das Ausführungsbeispiel gemäß den Figuren 13 bis 15.

Die Figuren 7 und 8 sowie 11 bis 15 zeigen Ausführungsbeispiele, bei denen das Haupt-Schneidelement 20 entgegen der Vorschubrichtung V gegenüber den Neben-Schneidelementen 21 zurückversetzt angeordnet sind. Dementsprechend trifft immer zuerst das vordere Paar Neben-Schneidelemente 21 auf den Boden und führt zu einer ersten Zerteilungswirkung. Anschließend greift das zweite Paar Neben-Schneidelemente 21 (Figuren 11, 12) beziehungsweise abschließend das Haupt-Schneidelement 20 ein. Der Verschleiß verteilt sich daher stärker auf die beiden Neben-Schneidelemente 21. Infolge dieser verschleißoptimierten Werkzeugauslegung können insbesondere auch für die Neben-Schneidelemente 21 und das Haupt-.Schneidelement 20 gleiche Teile verwendet werden.

## Patentansprüche

1. Bodenbearbeitungswerkzeug, insbesondere Grubberspitze, mit einem Tragteil (10), das an einem Schneidenhalter (13) ein Haupt-Schneidelement (20) und wenigstens zwei Neben-Schneidelemente (21) trägt, wobei sowohl das Haupt-Schneidelement (20) als auch die Neben-Schneidelemente (21) jeweils eine Schneidkante (20.3, 21.3) aufweisen, wobei die Schneidkanten (21.3) der Neben-Schneidelemente (21) versetzt zu der Schneidkante (20.3) des Haupt-Schneidelementes (20) angeordnet sind,
**dadurch gekennzeichnet,**
**dass** das Tragteil (10) einen auf seiner vorderen Seite vorstehenden Brechersteg (16) und einer rückwärtigen Seite eingetiefte Brechernut (17) aufweist oder das Tragteil (10) eine auf seiner vorderen Seite eingetiefte Brechernut (17) und auf seiner rückwärtigen Seite einen vorstehenden Brechersteg (16) aufweist.

2. Bodenbearbeitungswerkzeug nach Anspruch 1,
**dadurch gekennzeichnet,**
**dass** die Schneidkanten (21.3) der Neben-Schneidelemente (21) zueinander parallel verlaufen.

3. Bodenbearbeitungswerkzeug nach Anspruch 1 oder 2,
**dadurch gekennzeichnet,**
**dass** die Schneidkanten (21.3) der Neben-Schneidelemente (21) zueinander fluchtend angeordnet sind.

4. Bodenbearbeitungswerkzeug nach einem der Ansprüche 1 bis 3,
**dadurch gekennzeichnet,**
**dass** die Schneidkante (20.3) des Haupt-Schneidelementes (20) parallel zu den Schneidkanten (21.3) der Neben-Schneidelemente (21) steht.

5. Bodenbearbeitungswerkzeug nach einem der Ansprüche 1 bis 4,
**dadurch gekennzeichnet,**
**dass** die Schneidkante (20.3) des Haupt-Schneidelementes (20) mindestens 4 mm von der Schneidkante (21.3) des Neben-Schneidelementes (21) beabstandet angeordnet ist.

6. Bodenbearbeitungswerkzeug nach einem der Ansprüche 1 bis 5,
**dadurch gekennzeichnet,**
**dass** die Schneidkante (20.3) des Haupt-Schneidelementes (20) maximal 15 mm von der Schneidkante (21.3) des Neben-Schneidelementes (21) beabstandet angeordnet ist.

7. Bodenbearbeitungswerkzeug nach einem der Ansprüche 1 bis 6,
**dadurch gekennzeichnet,**
**dass** der Schneidenhalter (13) Schneidelementaufnahmen (14) für das Haupt-Schneidelement (20) und die Neben-Schneidelemente (21) aufweist, dass die Schneidelementaufnahmen (14) eine Sitzfläche (14.4) und eine dazu im Winkel stehende Anlagefläche (14.2) aufweisen,
**dass** das Haupt-Schneidelement (20) und die Neben-Schneidelemente (21) jeweils mit einem Befestigungsabschnitt (20.1; 21.1) auf der Sitzfläche (14.1) und mit einem Schneidansatz (20.2; 21.2) auf der Anlagefläche (14.2) abgestützt sind, und

8. Bodenbearbeitungswerkzeug nach Anspruch 7,
**dadurch gekennzeichnet,**
**dass** die Anlageflächen (14.2) und/oder die Sitzflächen (14.1) der Neben-Schneidelemente (21) und des Haupt-Schneidelementes (20) zueinander parallel angeordnet sind.

9. Bodenbearbeitungswerkzeug nach einem der Ansprüche 1 bis 8,
**dadurch gekennzeichnet,**
**dass** das Hauptschneidelement (20) in Vorschubrichtung (V) gegenüber den Neben-Schneidelementen vorsteht oder zurückversetzt zu diesen angeordnet ist.

10. Bodenbearbeitungswerkzeug nach einem der Ansprüche 7 bis 9,
**dadurch gekennzeichnet,**
**dass** die Sitzflächen (14.1) im Bereich von 8 mm bis 14 mm zueinander beabstandet angeordnet sind.

11. Bodenbearbeitungswerkzeug nach Anspruch 7 bis 10,
**dadurch gekennzeichnet,**
**dass** die Anlageflächen (14.2) mindestens 4 mm, vorzugsweise im Bereich von 10 mm bis 15 mm zueinander beabstandet angeordnet sind.

12. Bodenbearbeitungswerkzeug nach einem der Ansprüche 1 bis 11,
**dadurch gekennzeichnet,**
**dass** sowohl das Haupt- als auch die Neben-Schneidelemente (20, 21) Ableitflächen (20.4; 21.4) aufweisen, die zueinander parallel angeordnet und mindestens 4 mm, vorzugsweise im Bereich von 5 mm bis 11 mm, zueinander beabstandet angeordnet sind.

13. Bodenbearbeitungswerkzeug nach Anspruch 12, **dadurch gekennzeichnet,**
**dass** die Ableitflächen (20.4; 21.4) zueinander im Winkel, vorzugsweise im Bereich zwischen x° und y° angeordnet sind.

14. Bodenbearbeitungswerkzeug nach einem der Ansprüche 1 bis 13,
**dadurch gekennzeichnet,**
**dass** an dem Schneidenhalter (13) die Neben-Schneidelemente (21) beidseitig symmetrisch zu dem Haupt-Schneidelement (20) angeordnet sind.

15. Bodenbearbeitungswerkzeug nach einem der Ansprüche 1 bis 14,
**dadurch gekennzeichnet,**
**dass** beidseits des Haupt-Schneidelements (20) jeweils wenigstens zwei Neben-Schneidelemente (21) angeordnet sind.

16. Bodenbearbeitungswerkzeug nach einem der Ansprüche 1 bis 15,
**dadurch gekennzeichnet,**
**dass** die Breite der Schneidkanten (21.3) der Neben-Schneidelemente (21) mindestens 0,5-mal die Breite der Schneidkante (20.3) des Haupt-Schneidelementes (20) beträgt.

17. Bodenbearbeitungswerkzeug nach einem der Ansprüche 1 bis 16,
**dadurch gekennzeichnet,**
**dass** die Schneidkante (20.3) des Haupt-Schneidelementes (20) quer zur Vorschubrichtung (V) und in Schwerkraftrichtung versetzt zu der Schneidkante (21.3) des Neben-Schneidelementes (21) steht.

## Claims

1. A soil working tool, in particular a cultivator tip, having a carrier part (10) which bears a main cutting element (20) and at least two secondary cutting elements (21) on a blade holder (13), wherein both the main cutting element (20) and the secondary cutting elements (21) each have a cutting edge (20.3, 21.3), the cutting edges (21.3) of the secondary cutting elements (21) being arranged offset from the cutting edge (20.3) of the main cutting element (20),
**characterised in that**,
the carrier part (10) has a breaker bar (16) projecting on its front side and a breaker groove (17) recessed on a rear side, or the carrier part (10) has a breaker groove (17) recessed on its front side and a breaker bar projecting on its rear side (16).

2. The soil working tool according to claim 1,
**characterised in that**,
the cutting edges (21.3) of the secondary cutting elements (21) extend parallel to one another.

3. The soil working tool according to claim 1 or 2,
**characterised in that**,
the cutting edges (21.3) of the secondary cutting elements (21) are arranged flush with one another.

4. The soil working tool according to any one of claims 1 to 3,
**characterised in that**,
the cutting edge (20.3) of the main cutting element (20) is parallel to the cutting edges (21.3) of the secondary cutting elements (21).

5. The soil working tool according to any one of claims 1 to 4,
**characterised in that**,
the cutting edge (20.3) of the main cutting element (20) is arranged at a distance of at least 4 mm from the cutting edge (21.3) of the secondary cutting element (21).

6. The soil working tool according to any one of claims 1 to 5,
**characterised in that**,
the cutting edge (20.3) of the main cutting element (20) is arranged at a maximum distance of 15 mm from the cutting edge (21.3) of the secondary cutting element (21).

7. The soil working tool according to any one of claims 1 to 6,
**characterised in that**,
the blade holder (13) has cutting element receptacles (14) for the main cutting element (20) and the secondary cutting elements (21),
the cutting element receptacles (14) have a seating surface (14.4) and a contact surface (14.2) angled thereto,
the main cutting element (20) and the secondary cutting elements (21) are each supported with a fastening section (20.1; 21.1) on the seating surface (14.1) and with a cutting attachment (20.2; 21.2) on the contact surface (14.2), and

8. The soil working tool according to claim 7,
**characterised in that**,
the contact surfaces (14.2) and/or the seating surfaces (14.1) of the secondary cutting elements (21) and the main cutting element (20) are arranged parallel to one another.

9. The soil working tool according to any one of claims 1 to 8,
**characterised in that**,
the main cutting element (20) protrudes in the feed direction (V) with respect to the secondary cutting elements or is arranged set back from these.

10. The soil working tool according to any one of claims 7 to 9,
**characterised in that**,
the seating surfaces (14.1) are arranged at a distance within a range of 8 mm to 14 mm from one another.

11. The soil working tool according to claims 7 to 10,
**characterised in that**,
the contact surfaces (14.2) are arranged at a distance of at least 4 mm, preferably at a range of 10 mm to 15 mm, from one another.

12. The soil working tool according to any one of claims 1 to 11,
**characterised in that**,
both the main and the secondary cutting elements (20, 21) have discharge surfaces (20.4; 21.4) which are arranged parallel to one another and are arranged at a distance of at least 4 mm, preferably at a range of 5 mm to 11 mm, from one another.

13. The soil working tool according to claim 12,
**characterised in that**,
the discharge surfaces (20.4; 21.4) are arranged at an angle to one another, preferably in the range between x° and y°.

14. The soil working tool according to any one of claims 1 to 13,
**characterised in that**,
the secondary cutting elements (21) are arranged symmetrically on both sides of the main cutting element (20) on the blade holder (13).

15. The soil working tool according to any one of claims 1 to 14,
**characterised in that**,
at least two secondary cutting elements (21) are arranged on each of the two sides of the main cutting element (20).

16. The soil working tool according to any one of claims 1 to 15,
**characterised in that**,
the width of the cutting edges (21.3) of the secondary cutting elements (21) is at least 0.5 times the width of the cutting edge (20.3) of the main cutting element (20).

17. The soil working tool according to any one of claims 1 to 16,
**characterised in that**,
the cutting edge (20.3) of the main cutting element (20) is transverse to the feed direction (V) and offset in the direction of gravity to the cutting edge (21.3) of the secondary cutting element (21).

## Revendications

1. Outil de travail du sol, en particulier pointe de cultivateur, comprenant une partie de support (10) qui porte un élément de coupe principal (20) et au moins deux éléments de coupe secondaires (21) sur un porte-outil de coupe (13), à la fois l'élément de coupe principal (20) et les éléments de coupe secondaires (21) présentant respectivement un bord de coupe (20.3, 21.3), les bords de coupe (21.3) des éléments de coupe secondaires (21) étant décalés par rapport au bord de coupe (20.3) de l'élément de coupe principal (20),
**caractérisé en ce que**
la partie de support (10) a une bande de concasseur (16) faisant saillie sur sa face avant et une rainure de concasseur (17) en retrait sur sa face arrière ou la partie de support (10) a une rainure de concasseur (17) en retrait sur sa face avant et une bande de concasseur (16) en saillie sur sa face arrière.

2. Outil de travail du sol selon la revendication 1,
**caractérisé en ce que**
les bords de coupe (21.3) des éléments de coupe secondaires (21) sont parallèles parallèlement les uns aux autres.

3. Outil de travail du sol selon la revendication 1 ou 2,
**caractérisé en ce que**
les bords de coupe (21.3) des éléments de coupe secondaires (21) sont disposés en alignement les uns avec les autres.

4. Outil de travail du sol selon une des revendications 1 à 3,
**caractérisé en ce que**
le bord de coupe (20.3) de l'élément de coupe principal (20) est parallèle aux bords de coupe (21.3) des éléments de coupe secondaires (21).

5. Outil de travail du sol selon une des revendications 1 à 4,
**caractérisé en ce que**
le bord de coupe (20.3) de l'élément de coupe principal (20) est disposé à au moins 4 mm du bord de coupe (21.3) de l'élément de coupe secondaire (21).

6. Outil de travail du sol selon une des revendications 1 à 5,
**caractérisé en ce que**
le bord de coupe (20.3) de l'élément de coupe principal (20) est disposé à une distance maximale de 15 mm du bord de coupe (21.3) de l'élément de coupe secondaire (21).

7. Outil de travail du sol selon une des revendications 1 à 6,
**caractérisé en ce que**
le porte-outil de coupe (13) présente des logements d'élément de coupe (14) pour l'élément de coupe principal (20) et les éléments de coupe secondaires (21),
**en ce que** les logements d'éléments de coupe (14) ont une surface d'assise (14.4) et une surface d'appui (14.2) formant un angle avec celle-ci,
**en ce que** l'élément de coupe principal (20) et les éléments de coupe secondaires (21) sont respectivement supportés par une partie de fixation (20.1 ; 21.1) sur la surface d'assise (14.1) et par un accessoire de coupe (20.2 ; 21.2) sur la surface d'appui (14.2) et

8. Outil de travail du sol selon la revendication 7,
**caractérisé en ce que**
les surfaces d'appui (14.2) et/ou les surfaces d'assise (14.1) des éléments de coupe secondaires (21) et de l'élément de coupe principal (20) sont parallèles les unes aux autres.

9. Outil de travail du sol selon une des revendications 1 à 8,
**caractérisé en ce que**
l'élément de coupe principal (20) fait saillie dans la direction d'avance (V) des éléments de coupe secondaires ou est disposé en retrait par rapport à eux.

10. Outil de travail du sol selon une des revendications 7 à 9,
**caractérisé en ce que**
les surfaces d'assise (14.1) sont espacées les unes des autres dans une plage comprise entre 8 mm et 14 mm.

11. Outil de travail du sol selon la revendication 7 à 10,
**caractérisé en ce que**
les surfaces d'appui (14.2) sont espacées les unes des autres d'au moins 4 mm, de préférence dans la plage comprise entre 10 mm et 15 mm.

12. Outil de travail du sol selon une des revendications 1 à 11,
**caractérisé en ce que**
les éléments de coupe principal et secondaire (20, 21) ont des surfaces de déviation (20.4 ; 21.4) qui sont parallèles les unes aux autres et qui sont disposées à au moins 4 mm l'une de l'autre, de préférence dans une plage comprise entre 5 mm et 11 mm.

13. Outil de travail du sol selon la revendication 12,
**caractérisé en ce que**
les surfaces de déviation (20.4 ; 21.4) forment un angle entre elles, de préférence dans la plage entre x⁰ et y⁰.

14. Outil de travail du sol selon une des revendications 1 à 13,
**caractérisé en ce que**
les éléments de coupe secondaires (21) sont disposés des deux côtés symétriquement à l'élément de coupe principal (20) sur le porte-outil de coupe (13).

15. Outil de travail du sol selon une des revendications 1 à 14,
**caractérisé en ce que**
au moins deux éléments de coupe secondaires (21) sont disposés de chaque côté de l'élément de coupe principal (20).

16. Outil de travail du sol selon une des revendications 1 à 15,
**caractérisé en ce que**
la largeur des bords de coupe (21.3) des éléments de coupe secondaires (21) est au moins 0,5 fois la largeur du bord de coupe (20.3) de l'élément de coupe principal (20).

17. Outil de travail du sol selon une des revendications 1 à 16,
**caractérisé en ce que**
le bord de coupe (20.3) de l'élément de coupe principal (20) est transversal à la direction d'avance (V) et décalé dans le sens de la gravité par rapport au bord de coupe (21.3) de l'élément de coupe secondaire (21).
